# EUROPEAN PATENT APPLICATION

(11) **EP 4 711 926 A1**
(43) Date of publication of application: **18.03.2026**
(21) Application number: 25197295.6
(22) Date of filing: 21.08.2025
(51) Int. Cl.: G06F 9/54, G05B 19/418

(54) **FLOW COMPUTER REMOTE TERMINAL UNIT WITH MODULAR SOFTWARE ARCHITECTURE**

(30) Priority: 16.09.2024 US 202418886552
(71) Applicant: ABB SCHWEIZ AG, 5400 Baden (CH)
(72) Inventor: ROBERTSON, Ezban, Skiatook, 74070 (US); PANCHOO, Brandel, Bartlesville, 74006 (US); JAIN, Priyanka, Gurugram 122009 (IN); SEENIVASAN, GowthamaPrabhu, Koduvilarpatty 625534 (IN); KNAPIK, Krzysztof, 40-507 Katowice (PL)
(74) Representative: Maiwald GmbH

(57) **Abstract**

A method includes executing, by a flow remote terminal unit (RTU) management system, a plurality of application instances that manage one or more industrial operations at an industrial facility; and receiving, from one or more input devices at the industrial facility and by an enablement framework of the RTU management system, input device information associated with the one or more industrial operations. The enablement framework manages the plurality of applications instances being executed by the flow RTU management system, and the enablement framework is partitioned separately in memory from the plurality of application instances. The method also includes determining, based on using a dispatcher of the enablement framework, one or more application instances, from the plurality of application instances, that utilize the input device information; and providing, by the dispatcher of the enablement framework, the input device information to the determined one or more application instances.

## Description

### FIELD

The present disclosure relates to flow computer software architecture. In particular, the present disclosure relates to flow computer remote terminal units (RTU) having a modular software architecture.

### BACKGROUND

Flow computers are electronic computers which implement algorithms using the analog and digital signals received from connected systems (e.g., flow meters, temperature, pressure and density transmitters) to which it is connected. Current flow computer software, and RTU software associated with the flow computers and/or connected systems, are monolithic software packages that include various applications that perform different functions. An update to any one of these individual applications requires an update and release of the entire monolithic software regardless of how small or large the changes are, because an update to any component of a monolithic software requires a release of the entire monolithic software. Changes may also have unintended and unrealized consequences due to the organic growth of the monolithic software where various dependencies may be introduced, which subsequently creates a large scope of testing. Moreover, the software solutions often require a custom host or computer software for communication and visualization. This custom host software typically must be maintained and synchronized with each release of the flow computer software.

### SUMMARY

A first aspect of the present application provides a method that comprises executing, by a flow remote terminal unit (RTU) management system, a plurality of application instances that manage one or more industrial operations at an industrial facility; receiving, from one or more input devices at the industrial facility and by an enablement framework of the RTU management system, input device information associated with the one or more industrial operations, wherein the enablement framework manages the plurality of applications instances being executed by the flow RTU management system, and wherein the enablement framework is partitioned separately in memory from the plurality of application instances; determining, based on using a dispatcher of the enablement framework, one or more application instances, from the plurality of application instances, that utilize the input device information; and providing, by the dispatcher of the enablement framework, the input device information to the determined one or more application instances.

According to an implementation of the first aspect, the RTU management system is an RTU computing device that is located within the industrial facility.

According to an implementation of the first aspect, the RTU management system is a cloud computing platform that is remote from the industrial facility.

According to an implementation of the first aspect, the one or more input devices comprise a sensor configured to measure one or more features of the one or more industrial operations at the industrial facility, and the input device information comprises data associated with the measured one or more features.

According to an implementation of the first aspect, receiving, from the one or more input devices at the industrial facility and by the enablement framework of the RTU management system, the input device information further comprises receiving, by the dispatcher and from the one or more input devices, the input device information; and providing, by the enablement framework, the input device information to the determined one or more application instances further comprises providing, by the dispatcher and to a first memory partition of a first application instance of the determined one or more application instances, a first portion of the input device information; and providing, by the dispatcher and to a second memory partition of a second application instance of the determined one or more application instances, a second portion of the input device information.

According to an implementation of the first aspect, a second application instance of the determined one or more application instances is a second instance of a same application of a first application instance of the determined one or more application instances.

According to an implementation of the first aspect, the enablement framework comprises a license manager, and the method further comprises receiving, by the dispatcher and from a licensing service, data associated with a license of a first application instance of the plurality of application instances; receiving, by the dispatcher and from the licensing service, data associated with a license of a second application instance of the plurality of application instances; providing, by the dispatcher and to the license manager, the data associated with the license of the first application instance; providing, by the dispatcher and to the license manager, the data associated with the license of the second application instance; verifying, by the license manager, the license of the first application instance; verifying, by the license manager, the license of the second application instance; and storing, by the license manager, the data associated with the license of the first application instance and the data associated with the license of the second application instance in a license pool of the license manager.

According to an implementation of the first aspect, the method further comprises allocating a use of a memory or one or more processors of the RTU management system between a first application instance of the plurality of application instances and a second application instance of the plurality of application instances.

According to an implementation of the first aspect, the method further comprises receiving, by the dispatcher, non-persistent data associated with one or more application instances of the plurality of application instances; providing, by the dispatcher and to a cache layer of the enablement framework, the non-persistent data; and storing, by the cache layer, the non-persistent data.

According to an implementation of the first aspect, the method further comprises receiving, by the dispatcher, a persistent data configuration associated with one or more application instances of the plurality of application instances; providing, by the dispatcher and to a data access layer of the enablement framework, the persistent data; and storing, by the data access layer, the persistent data.

According to an implementation of the first aspect, the input device information further comprises an encoded payload layer embedded in a header of the input device information, and determining the one or more application instances that utilize the input device information further comprises decoding, by the dispatcher, the encoded payload layer embedded in the header; and generating, by the dispatcher, an additional payload embedded in the input device information, and providing, by the dispatcher of the enablement framework, the input device information to the determined one or more application instances further comprises providing the additional payload embedded to the determined one or more application instances.

According to a second aspect of the present application, a remote terminal unit (RTU) management system comprises an enablement framework. The RTU management system is configured to execute a plurality of application instances that manage one or more industrial operations at an industrial facility; receive, using the enablement framework, input device information associated with the one or more industrial operations, wherein the enablement framework manages the plurality of applications instances being executed by the flow RTU management system, and wherein the enablement framework is partitioned separately in memory from the plurality of application instances; determine, based on using the enablement framework, one or more application instances, from the plurality of application instances, that utilize the input device information; and provide, using the enablement framework, the input device information to the determined one or more application instances.

According to an implementation of the second aspect, the RTU management system further comprises one or more input devices, the one or more input devices comprise a sensor configured to measure one or more features of the one or more industrial operations at the industrial facility, and the input device information comprises data associated with the measured one or more features.

According to an implementation of the second aspect, the enablement framework further comprises a dispatcher, and the enablement framework is further configured to receive, by the dispatcher and from one or more input devices, the input device information; and providing, using the enablement framework, the input device information to the determined one or more application instances further comprises providing, by the dispatcher and to a first memory partition of a first application instance of the determined one or more application instances, a first portion of the input device information; and providing, by the dispatcher and to a second memory partition of a second application instance of the determined one or more application instances, a second portion of the input device information.

According to an implementation of the second aspect, a second application instance of the determined one or more application instances is a second instance of a same application of a first application instance of the determined one or more application instances.

According to an implementation of the second aspect, the RTU management system further comprises a memory and one or more processors, and the enablement framework is further configured to allocate a use of the memory or the one or more processors between a first application instance of the plurality of application instances and a second application instance of the plurality of application instances.

According to an implementation of the second aspect, the enablement framework further comprises a dispatcher, and the enablement framework is further configured to receive, using the dispatcher, non-persistent data associated with one or more application instances of the plurality of application instances; provide, using the dispatcher and to a cache layer of the enablement framework, the non-persistent data; and store, using the cache layer, the non-persistent data.

According to an implementation of the second aspect, the enablement framework further comprises a dispatcher, and the enablement framework is further configured to receive, using the dispatcher, a persistent data configuration associated with one or more application instances of the plurality of application instances; provide, using the dispatcher and to a data access layer of the enablement framework, the persistent data; and store, using the data access layer, the persistent data.

According to an implementation of the second aspect, the enablement framework further comprises a dispatcher, the input device information further comprises an encoded payload layer embedded in a header of the input device information, and determining the one or more application instances that utilize the input device information further comprises decoding, by the dispatcher, the encoded payload layer embedded in the header; and generating, by the dispatcher, an additional payload embedded in the input device information. Providing, using the enablement framework, the input device information to the determined one or more application instances further comprises providing the additional payload embedded to the determined one or more application instances.

According to a third aspect of the present application, a non-transitory computer readable medium comprises computer-readable instructions which, when executed by one or more processors, facilitate executing a plurality of application instances that manage one or more industrial operations at an industrial facility; receiving, from one or more input devices at the industrial facility, input device information associated with the one or more industrial operations, wherein the enablement framework manages the plurality of applications instances being executed by the flow RTU management system, and wherein the enablement framework is partitioned separately in memory from the plurality of application instances; determining, based on using a dispatcher of the enablement framework, one or more application instances, from the plurality of application instances, that utilize the input device information; and providing, by the dispatcher of the enablement framework, the input device information to the determined one or more application instances

### BRIEF DESCRIPTION OF THE DRAWINGS

Subject matter of the present disclosure will be described in even greater detail below based on the exemplary figures. All features described and/or illustrated herein can be used alone or combined in different combinations. The features and advantages of various embodiments will become apparent by reading the following detailed description with reference to the attached drawings, which illustrate the following:
FIG. 1 is a simplified block diagram depicting an exemplary computing environment in accordance with one or more examples of the present application;
FIG. 2 is a simplified block diagram depicting an exemplary flow computer architecture in accordance with one or more examples of the present application;
FIG. 3 is a simplified block diagram depicting an exemplary adapter for one or more third party devices or systems in accordance with one or more examples of the present application;

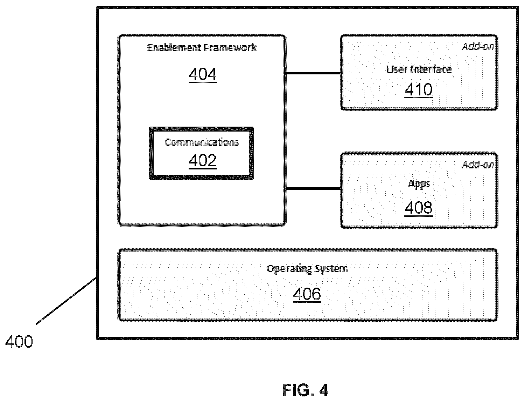

FIG. 4 is a simplified block diagram depicting an exemplary flow computer framework in accordance with one or more examples of the present application;
FIG. 5 is a simplified block diagram depicting an exemplary flow computer framework running multiple applications in accordance with one or more examples of the present application;
FIG. 6 is a schematic depiction of an exemplary flow computer architecture in accordance with one or more examples of the present application;
FIG. 7 is a simplified block diagram depicting an exemplary data dispatcher in accordance with one or more examples of the present application;
FIG. 8 is a simplified block diagram depicting an exemplary persistent data management in accordance with one or more examples of the present application;
FIG. 9 is a simplified diagram depicting an exemplary 5G computing environment in accordance with one or more examples of the present application;
FIG 10 is a simplified block diagram of one or more devices or systems according to one or more examples of the present disclosure; and
FIG. 11 illustrates a process performed by an example architecture of a computing environment according to one or more examples of the present disclosure.

### DETAILED DESCRIPTION

Examples of the presented application will now be described more fully hereinafter with reference to the accompanying FIGs., in which some, but not all, examples of the application are shown. Indeed, the application may be exemplified in different forms and should not be construed as limited to the examples set forth herein; rather, these examples are provided so that the application will satisfy applicable legal requirements. Where possible, any terms expressed in the singular form herein are meant to also include the plural form and vice versa, unless explicitly stated otherwise. Also, as used herein, the term "a" and/or "an" shall mean "one or more" even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on."

Systems, methods, and computer program products are herein disclosed that provide for a modular flow computer architecture that supports components add-ons. For instance, one or more embodiments of the present application provide a flow computer and RTU enablement software platform for measurement and control applications. This is a modular software architecture design for flow computer and RTU that utilizes an enablement software platform that supports add-on, module, or plugin architectures to manage the flow computer resources and software applications to extend or enhance the architecture's functionality. The software method includes the installation of measurement, automation or control, communication, or user interface add-ons and managing the execution of the add-ons. The method also includes the support for concurrent multiple versions of add-ons. The software method further allows the allocation of hardware or system software resources and security of the flow computer of the host.

For example, previous monolithic architecture assumes control of the flow computer or RTU, but provides the user and/or flow system no control of individual applications or components, because the architecture has one execution or one executable act. The executable may have built in services, but they are managed in one application which cannot be separated to only perform some executions. For instance, previous monolithic architectures may rely on referencing parameters with one resource and a giant library, where executions are made by accessing the library.

One or more embodiments of the present application of the new architecture provide easier development and management of software and system features by conserving computing resources and development for a specific application, or on specific features or functions, rather than the entire computing architecture. For instance, the embodiments may include a common software framework that may be deployed on any RTU or flow computer hardware, or virtual system, with specific applications and/or add-ons provided based on the function and hardware configuration of the specific RTU, flow computer, and/or virtual system. The architecture may also access inter-process communication (IPC) mechanisms and the common frameworks of the system for the applications and/or add-ons. The enablement framework software may manage the installation and execution of software add-ons or applications, and may also allow multiple versions of the same app to co-exist. application or add-on packages may be individually developed, deployed, or maintained, and the same application may be repackaged and deployed with varying capabilities and license options.

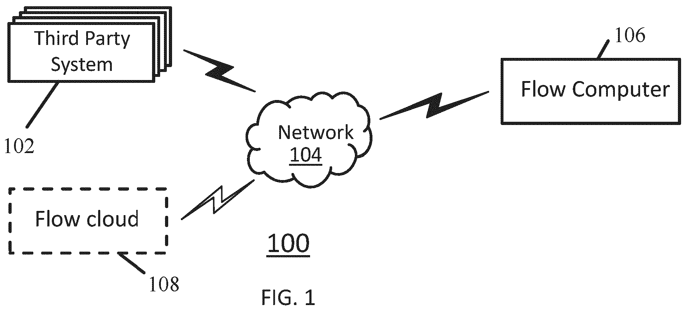

FIG. 1 is a simplified block diagram depicting an exemplary environment in accordance with an example of the present application. The environment 100 includes a third party system (e.g., service provider) 102, a flow computer 106 (e.g., a flow computer, RTU), and, optionally, a flow cloud computing system (e.g., back-end server) 108. Collectively, the flow computer 106 and flow cloud computing system 108 (e.g., flow cloud) may be referred to as the flow computer system. Although the entities within environment 100 may be described below and/or depicted in the FIGs. as being singular entities, it will be appreciated that the entities and functionalities discussed herein may be implemented by and/or include one or more entities.

The entities within the environment 100 such as the third party system 102, the flow computer 106, and the flow cloud 108 may be in communication with other systems within the environment 100 via the network 104. The network 106 may be a global area network (GAN) such as the Internet, a wide area network (WAN), a local area network (LAN), or any other type of network or combination of networks. The network 104 may provide a wireline, wireless, or a combination of wireline and wireless communication between the entities within the environment 100. Additionally, and/or alternatively, the flow computer 106 may be in communication with the flow cloud 108 without using the network 106. For instance, the flow computer 106 may use one or more communication protocols such as WI-FI or BLUETOOTH to communicate directly the with flow cloud 108 or indirectly via a further flow computer 106 and/or RTU 106.

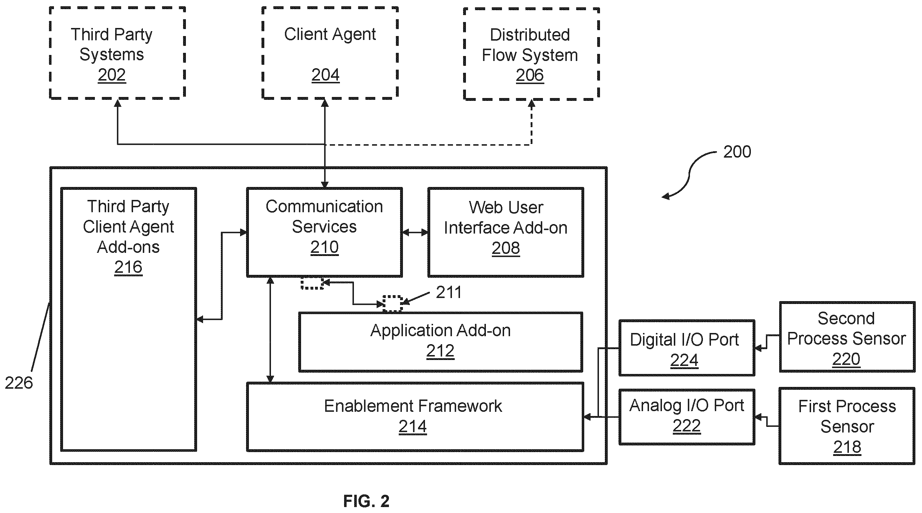

Flow computer 106 may be associated with one or more industrial process of the environment 100. Flow computer 106 may be and/or include, but is not limited to, a programmable logic device, an RTU, a desktop, laptop, tablet, mobile device (e.g., smartphone device or other mobile device), an internet of things (IOT) device, or any other type of computing device that generally comprises one or more communication components, one or more processing components, and one or more memory components. The flow computer 106 may be able to execute software applications managed by, in communication with, and/or otherwise associated with the enterprise organization. For example, flow computer 106 may be an electronic computer that implements one or more applications and/or algorithms using the analog and digital signals received from structures and/or devices (e.g., first process sensor 218 and/or second process sensor 220 of FIG. 2) of an industrial process (e.g., received from flow meters, temperature, pressure, and/or density transmitters and/or sensors) to which the flow computer is connected to. The flow computer may process these analog and digital signals locally and/or provide these signals (and/or data based on these signals) to the flow cloud computing system 108. Additionally, and/or alternatively, flow computer 106 may provide these signals (and/or data based on these signals) to third party system 102.

The flow computer 106 may also be a system and/or part of a system that collects, processes, and transmits signal data of an industrial process. For example, FIG. 2 is a simplified block diagram depicting an exemplary flow system 200 including a flow computer architecture 226 for flow computer 106 in accordance with one or more examples of the present application. Referring to FIG. 2, the flow system 200 utilizes the local resources of a flow computer and/or RTU to receive, send, and execute commands and applications for and/or from the flow computer and/or RTU. The flow system 200 may include one or more analog input/output (analog I/O) ports 222 for receiving analog signals from a first process sensor 218 (e.g., analog mass flow sensor, analog temperature sensor, analog pressure sensor, analog strain gauge, amplifier). The flow system 200 may also include one or more digital input/output (digital I/O) ports 224 for receiving digital signals and data from a second process sensor 218 (e.g., digital mass flow sensor, digital temperature sensor, digital pressure sensor, digital strain gauge). The flow system may provide the signals received from the digital I/O port 224 and/or the analog I/O port to the enablement framework 214 of the flow computer architecture 226. The enablement framework may provide the received signals (e.g., a representation of the received signal or the received signal itself) to communication services 210 (e.g., directly after receiving the signals) and/or data based on the received signals (e.g., after further processing the received signals), and communication services 210 may determine the appropriate recipient of the signals and/or data based on the contents received signals. For example, the communication services 210 may provide the received signals and/or data based on the content received signals to one or more application add-ons 212 (e.g., a pressure management application, flow rate monitoring application, process prediction application), one or more web user interface add-ons 208 (e.g., an interface that displays data and receives input from a further application and/or user), the distributed flow system 206 (e.g., the flow cloud computing system 108 and/or a further flow computer of the flow system), and/or one or more third party systems 202 (e.g., for third party processing of the received signals and/or data based on the received signals).

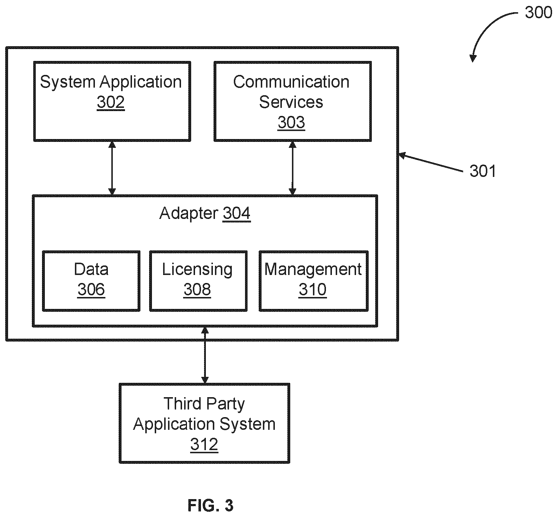

Additionally, and/or alternatively, flow system 200 can include one or more third party client agent add-ons 216. In one or more embodiments, the flow system 200 can include any application (e.g., a user interface or licensing service) provided by a third party system (e.g., third party system 202) and external to the enablement framework. For instance, for a licensing service provided as a third party client agent add-on 216, communication services 210 may receive a license and/or certificate for application add-on 212 (e.g., a license for validating application add-on 212) from the client agents 204 (e.g., third party licensing and/or certificates system) and provide the received license and/or certificate to one or more third party client agent add-ons 216. The one or more third party client agent add-ons 216 may provide a licensing service that stores a received license and/or verifies the received license based on data provided to the communication services 210 by the one or more application add-ons 212 and/or the one or more third party systems 202 (and provided to the one or more client agent add-ons 216 by the communication services 210). Moreover, client agent add-ons 216, in contrast to client agents 204, can include an add-on infrastructure (e.g., one or more elements of system 301 of FIG. 3) and can be deployed using the flow system architecture 226.

Additionally, and/or alternatively, communication services 210 may provide data to the one or more web user interface add-ons 208, and the web user interface add-ons 208 may display the received data and/or data based on the data received from the communication services 210 (e.g., a prompt requesting configuration of an application add-on 212, verification of a configuration of the one or more application add-ons 212, enablement framework 214, or one or more third party client agent add-ons 216, and/or a privilege level of a user). Communication services 210 may provide the received input to the enablement framework 214, the one or more application add-ons 212, the one or more third party client agent add-ons 216, the one or more third party system 202, the one or more client agents 204, and/or the distributed flow system 206.

Additionally, and/or alternatively, the communication services 210 may receive data from one or more third party systems 202 (e.g., installation and configuration data for an application add-on 212, second process sensor 220, first process sensor 218). The communication services 210 may provide the received data to the enablement framework 214, one or more applications add-ons 212, one or more client agents 204, the distributed flow system 206, one or more third party client agent add-ons 216 (e.g., for use with a received certificate), and/or an operating system of the flow system 200. For example, the communication services 210 may provide the data received from the one or more third party system 202 for further processing (e.g., installation, reconfiguration including updates) to a framework, add-on, and/or system configured to perform the appropriate processing of the received and/or determination based on the received data.

Referring to FIG. 2 and back to FIG. 1, the flow cloud computing system 108 is a computing system that is associated with the industrial process and may include and/or be a part of the distributed flow system 206. The flow cloud computing system 108 is optional in the environment 100, as the distributed flow system 206 is optional in the flow system 200. Similarly, third party systems 202 and client agents 204 can also be optional in the flow system 200. For example, flow computer 106 may perform one or more embodiments of the present application independently and/or locally. In embodiments including the flow cloud computing system 108 (e.g., and thereby including distributed flow system 206), flow cloud computing system 108 includes one or more computing devices, computing platforms, systems, servers, and/or other apparatuses physically separate from the flow computer 106 capable of performing tasks, functions, and/or other actions for the enterprise organization associated with the industrial process. In some instances, the flow cloud computing system 108 may, for example, receive from and/or provide information to the flow computer 106 and/or the third party system 102. The flow cloud computing system 108 may be implemented using one or more computing platforms, devices, servers, and/or apparatuses. In some variations, the flow cloud computing system 108 may be implemented as engines, software functions, and/or applications. In other words, the functionalities of the flow cloud computing system 108 may be implemented as software instructions stored in storage (e.g., memory) and executed by one or more processors.

The third party system 102 is a computing system that is associated with one or more applications of the flow system and may include and/or be a part of the one or more third party systems 202 and/or client agents 204. The third party system 102 includes one or more computing devices, computing platforms, systems, servers, and/or other apparatuses separate from the flow computer 106 and/or flow cloud computing system 108 capable of performing tasks, functions, and/or other actions for an enterprise organization associated with an application and/or service of the flow computer 106 and/or the flow cloud computing system 108. In some instances, the third party system 108 may, for example, receive from and/or provide information to the flow computer 106 and/or the flow cloud computing system 108. The third party system 102 may be implemented using one or more computing platforms, devices, servers, and/or apparatuses. In some variations, the third party system 102 may be implemented as engines, software functions, and/or applications. In other words, the functionalities of the third party system 108 may be implemented as software instructions stored in storage (e.g., memory) and executed by one or more processors.

Applications and device interfaces (e.g., application add-on 212) can be a part of the flow system 200 that provide users with the functionality they expect. One or more embodiments of the present application can be built with the assumption that the flow system 200 is available to work with third-party applications and device interfaces (e.g., one or more third party systems 202), offering users even broader functionality or functionality created for specific user needs. One or more embodiments of the present application can provide this functionality by providing an optional adapter 211 that can provide a connecting layer between applications and elements.

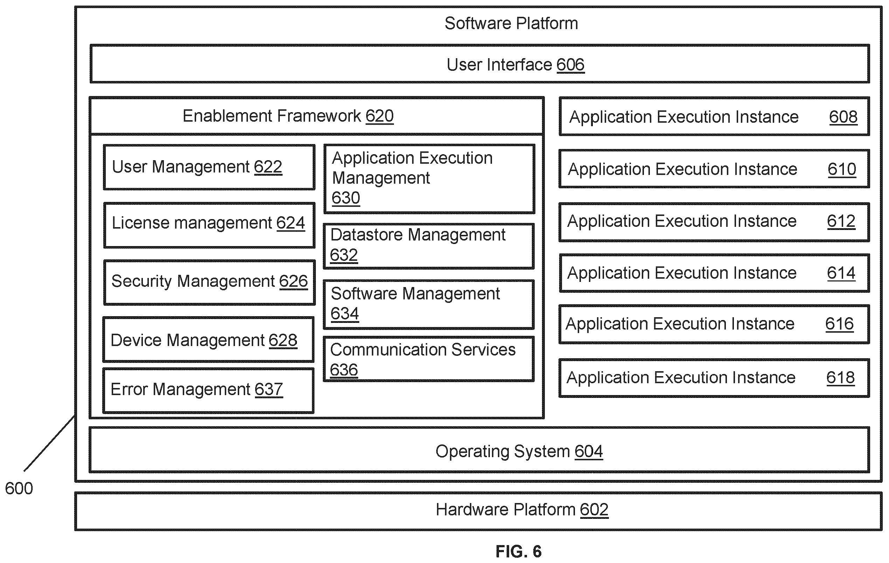

Referring to the environment 300 of FIG. 3, to support third-party applications and device interfaces, the flow system 200 components have been built to allow for a separate adapter 304 (e.g., similar to adapter 211 of flow system 200) that may be provided to application developers as a link between their application code (e.g., the application of a third party system 312) and the rest of the flow system 301, which may include one or more system applications 302 and the enablement framework 620 of FIG. 6 and the components thereof disclosed herein. The adapter 304 may be part of an enablement framework and/or may include elements of the enablement framework, but can provide functionalities beyond communication. The adapter 304 allows developers to use elements of system 301 elements such as data persistence, mechanisms for sending and receiving non-persistent data 306, licensing 308, and application lifecycle management 310. As a result, third party applications 312 (e.g., device interfaces) may be compatible with all other functions of the system 301 and may both produce and send data to the system 301 and consume data from other parts of the system 301. Moreover, the adapter 304 can act as a connecting layer between any applications of system 302 and the elements of an enablement framework of system 301 (e.g., providing a bridge between system application 302 and communication services 303), additionally and/or alternatively to providing a connecting layer between the systems of third party applications 312 (e.g., providing a bridge between third party application system 312 and system application 302 and/or communication services 303).

For example, the one or more system applications 302, non-persistent and persistent data management 306, licensing 308, and application lifecycle management 310 can all be considered part of the system 301. The adapter can allow existing applications, as well as third party applications 312 to cooperate with the one or more system applications 302, non-persistent and persistent data management 306, licensing 308, and application lifecycle management 310 through application programming interface (API) support but also implemented internal business logic. As a result, the adapter can become a connecting layer between the application (e.g., third party application 312 and/or system application 302) and the rest of the system. The adapter enabled system can be expanded with additional basic functionalities (e.g., redundant license support, additional data handling mechanisms) which may be required by future applications. For example, a third party application 312 may require a different licensing mechanism (e.g., licensing 308) than the one built into the system. A new licensing mechanism, built like the application 312 and based on the adapter 304, can be installed in the system 301 in the future and used by many applications (e.g., third party application 312 and/or 302).

It will be appreciated that the exemplary environment depicted in FIG. 1 is merely an example, and that the principles discussed herein may also be applicable to other situations-for example, including other types of institutions, organizations, devices, systems, and network configurations.

One or more embodiments of the present application provide a new approach to the software design of a modular architecture for a flow computer system that supports component add-ons (e.g., plugins, modules) which include applications (e.g., apps). This architecture, for example architecture 226 of flow system 200, may allow applications (e.g., application add-ons 212) to be individual packages, individually maintained, and independently executed while providing common services for management and communication of the applications by a common software framework (e.g., enablement framework 214). The architecture may also support a user interface (e.g., web user interface add-on 208) as an add-on. This new approach may provide a software framework with basic services for RTU general management of hardware and software components, and to manage the services available to the applications. The applications may add new, enhanced, and/or extend features and functions to the system and may include measurement, automation, communication, and/or hardware interface capabilities or utilities.

Additionally, and/or alternatively, one or more embodiments of the present application of the new software design may be capable of installing any application individually (e.g., based on data received from one or more third party systems 202, client agents 204, and/or the distributed flow system 206), and may have multiple versions of the same application package. This may provide the ability to maintain an approved package alongside an unapproved package, for example in the case where metrology approval is required. An application (e.g., application add-on 212 such as an application package) may create multiple application instances, and each may be licensed individually (e.g., based on services provided by the third party client agent add-on 216). The framework software or one or more of the framework components may also be licensed for a specific hardware or virtual configuration for fixed or variable subscription models. The modular design may allow for a significantly reduced software development time by focusing computing resources and development on a specific application, or on specific features or functions, instead of the entire computing architecture, and supports concurrent developments and testing strategies. Moreover, the risk of unintended consequences during development, updates, and revisions to the software may be reduced as the focus on interfacing is on standardized API. The management and estimations for new feature development or enhancements may also occur at lower risks.

Referring to FIG. 3, one or more embodiments of the present application provide an architecture 400 (e.g., similar to architecture 200) for flow computers or flow RTUs including an enablement framework 404, an communication service 402, a user interface 410, and one or more applications 408 running atop an operating system 406. The communication service 402 provides the communication services for both external and internal interactions with the framework (e.g., between one or more third party system and the applications). The enablement framework 404 may operate independently without any application add-ons (e.g., without applications 408) to provide basic services such as user management, data management, license management, security management, software update services, communication protocols and related services, and other hardware resource management services. The enablement framework 404 may include services to allocate one or more specific sets of hardware resources via the operating system or other hardware resource allocation software. Such allocations may include reserving specific CPU cores, communication ports, and/or memory partitions.

The enablement framework 404 may support application add-on management services. This allows the enablement framework 404 to communicate with, allocate resources for, and control the installations, access and interactions with other add-ons, operating systems, and/or other enablement framework 404 components. The enablement framework 404 may also support types of user interface add-ons (e.g., user interface 410). These type of add-ons may be graphical or non-graphical. The standard type of user interface 410 add-ons provide users with a graphical user interface for interactions with the enablement framework 404 and its services, and may be rendered on standard web browser technologies that do not require special software.

The user interface 410 provides some key usability and accessibility features to the platform. In areas of configuration, user interface 410 allows the configuration of the flow system (e.g., architecture 400) or individual add-ons to be exported or copied from one flow system and transfer, exported, or copied onto another flow system. As a result, one or more embodiments of the present application allow for configuring two or more systems with identical software add-ons and corresponding configurations. This may make it easier and more convenient for commissioning and decommissioning of flow computer systems. This also allows a flow system to restore its configuration from a backup configuration when some failure occurs in the device that requires it to be replace or reconfigured. In some instances of manufacturing where it may be necessary to configure multiple flow computer systems with the same configuration, one or more embodiments of the present application may provide an advantage by conserving computing resources in redeploying the system rapidly and reducing flow system downtime.

The user interface 410 also provides seamless retrieval of various system logs including operating system 406 and enablement framework 404 platform logs which are used for diagnostics to determine root causes of failures or operating conditions or similar verification. The user interface 410 may also provide overall ease of use, convenience, and a modern user experience to view status and configurations of the flow system and add-ons (e.g., applications 408), to install and configure add-on or system components, and to perform overall administration activities. The enablement framework 404 may support various types of applications 408 that individually or together provide new functionalities, or to extend or enhanced existing functionalities. These applications 408 may range from utilities such as data collection or data conversions, to measurement calculations, automation control, and/or other communication functions. Applications 408 may also support and extend various services of the enablement framework 404, such as shutdown, startup, removal of services, and/or license enforcement. These add-ons or applications 408 are not necessarily constrained by the flow computer resources but may be flexible in their deployment and execution (e.g., in combination with the distributed flow system 206). For example, add-ons and applications 408 may be designed to a local flow computer execution that communicates to a cloud application (e.g., flow cloud computing system 108) or similar utilities passing data for storage or additional processing, simply act as a data aggregator providing integration to other systems, and/or export that data for viewing. The add-on may be a utility application 408 that monitors other applications 408 and reports or logs operational status to a cloud storage or cloud application (e.g., in flow cloud computing system 108), or other enterprise systems (e.g., one or more third party systems 202). An add-on may also be a utility application that operates a pre-built machine learning (ML) model that updates other add-ons, reconfigures other add-ons, adds and removes add-on instances, and/or simply monitors other add-ons and report locally (e.g., to flow computer 106) and/or communicates its information to a cloud (e.g., flow cloud computing system 108) or similar enterprise systems (e.g., one or more third party systems 202).

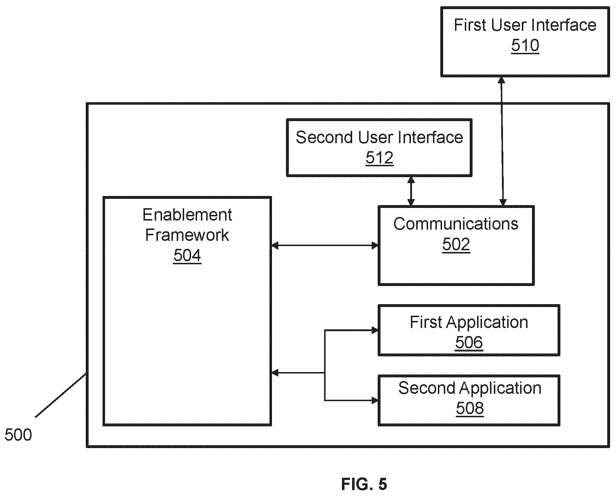

Additionally, and/or alternatively, as shown in architecture 500 of FIG. 5, the communication services 502 may be an add-on to the enablement framework 504 and may provide one or more communication protocol extensions. The enablement framework 504 or its add-ons (e.g., first application 506 and/or second application 508) communicate by using the available communication services 502. This may include operating system IPC mechanisms, message queues, or protocols such as REST, sockets, open platform communications unified architecture (OPC-UA), and/or MQ telemetry transport (MQTT). The enablement framework communication services (e.g., communication services 402 of enablement framework 404 or communication services 502 of enablement framework 504) may support extension to various types of communication protocols and may support multiple protocols simultaneously. The enablement framework 504 may also support one or more user interfaces via add-ons (e.g., internal second user interface 512) and/or externally through of its supported communication protocols (e.g., external first user interface 510).

FIG. 6 illustrates a schematic contextual, functional, and executional decomposition of a flow computer architecture 600. As shown in the architecture 600 of FIG. 6, the enablement framework 620 (which may be any of enablement frameworks 214, 404, or 504) may be a runtime software that provides all the services for add-on functionalities. For instance, the flow computer architecture 600 may communicate and/or operate one or more supervisory control and data acquisition (SCADA) systems of the hardware platform 602. The runtime enablement framework 620 includes various components referred to ass managers that provides the enablement framework 504 services. For example, the enablement framework 620 may include and/or provide a user management 622 component, a license management 624 component, a security management 626 component, a device management 628 component, an application execution management 630 component, a data store management 632 component, a software management 634 component, and/or communication services 636 component.

One or more components 622 - 636 of the enablement framework 504 and/or 620 may exist as independent processes or any number of combined processes to provide the same services. The processes can communicate through any combination of standard software IPC mechanisms such as queues, pipes, sockets, shared memory, event subscription or Publish-Subscribe methods. The communication methods may also be used for external communication with applications or add-ons. The enablement framework 620 utilizes event-driven programming paradigms, and event-driven runtime frameworks supporting asynchronous I/O models to improve concurrency, execution efficiency, and/or power consumption of embedded RTU hardware (e.g., one or more processors 1002, memory 1004, sensors 1008 such as first process sensor 218 and/or second process sensor 220, and/or one or more actuators 1012).

In one or more embodiments, each component of the enablement framework 620 can be provisioned in a separate trusted execution environment (TEE). Additionally, and/or alternatively, the enablement framework 504 and/or 620 can operate at a higher priority level than any other element of architecture 500 and/or 600 that allows for the system to perform its functions (e.g., does not assume such a high priority that operating system 604 cannot run). The enablement framework 620 can then be considered a master controller of the architecture 600. For instance, because the application execution instances 608-618 are part of the architecture 600, the application execution instances 608-618 can have their respective privileges determined by the enablement framework. For example, based on the privilege designated to an application execution instance 608 by the enablement framework 620, the application execution instance 608 might not be able to update the enablement framework, but could be allowed to configure the enablement framework 620.

The enablement framework of architecture 600 may include the add-on or application (also referred to as module or plugin) execution management 630 component. The application execution management 630 component manages the execution of framework add-ons (e.g., application execution instances 608 - 618). Each add-on may provide a process or multiple processes and may contain multiple threads of execution, and a single add-on package may have one or more execution instances, each uniquely identified. As a result, each of application execution instances 608 - 618 may be a separate thread of execution of the same application (e.g., a valve monitoring application) and/or separate instances of separate applications. For example, application execution management 630 component may partition different portions of hardware resources for each respective application execution instance for independent execution. For instance, the enablement framework 620, via application execution management 630 component and one or more further components (e.g., communication services 636) may allocate a use of a memory or one or more processors of the RTU management system between a first application instance of the plurality of application instances and a second application instance of the plurality of application instances.

Additionally, and/or alternatively, application execution instances 608 - 618 may be a combination thereof such that application execution instances 608 - 614 are execution instances of a first application, application execution instance 616 is an execution instance of a second application, and application execution instance 618 is an execution instance of a third application, and each application execution instances includes unique identifier (e.g., a universally unique identifier (UUID)). Each add-on may share a common execution model, while multiple add-ons may be installed and executing at the same time but with different revisions. Additionally, and/or alternatively, each add-on may provide the same, new, or enhanced features and functions. The application execution management 630 component also maintains all application execution instances 608 - 618 and communicates with license management 624 component to validate licensing for each application execution instance 618, and supports disabling or execution suspension.

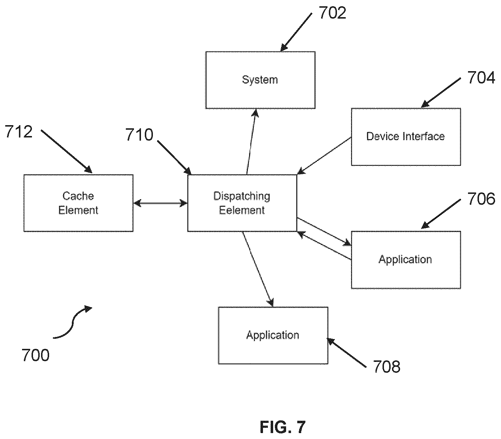

The communication services 636 component may provide communication between the different components, add-ons, operating systems, and user interfaces of system 600. To do so, communication services 636 component may include one or more communication structures and services providing communication over different protocols, between different components and/or add-ons, and/or between different systems. Communication services 636 may include a dispatcher (e.g., dispatching element 710) as shown in the architecture 700 of FIG. 7. The dispatcher 710 efficiently routes messages between processes (e.g., components of the enablement framework such as application execution management 630 component and one or more application 706, 708 add-ons). The dispatcher 710 may primarily utilize sockets and protocol buffer (protobuf) message formats, manage all existing connections, and/or establish new connections. Each connection may be established and identified uniquely through a UUID. With a valid connection, the dispatcher 710 routes messages to connections and read messages from connections.

The enablement framework 700 also includes components to manage non-persistent and persistent data stores associated with the flow system 702. For example, the data store management 632 component can include a persistent data portion and a non-persistent data portion (e.g., cache element 712), and the data store management 632 component can be provisioned locally on a flow computer or distributed on a cloud based system. The persistent portion of the data store management 632 component uses a database structure and stores configurations for the various framework components, and configurations for add-ons. The persistent portion of the data store management 632 may utilize various types of databases from simple file type datastores to SQL or SQLite databases. The persistent portion of the data store management 632 component maintains consistent records of various types and structures of add-ons and may support adoption of any type of database. The non-persistent portion (e.g., cache element 712) of the data store management 632 component serves as a bridge connecting various add-ons. The cache element 712 facilitates transferring and sharing of data generated by application add-ons (e.g. applications 706 and 708 and device interfaces 704 such as sensors and automation elements) with other applications in the same or different connected systems (e.g., flow system 702 and/or the distributed flow system 206). For example, the dispatcher (e.g., 710) may receive non-persistent data associated with one or more application instances of the plurality of application instances and provide to a cache layer (e.g., cache element 712) of the enablement framework, the non-persistent data. The cache layer may then store the non-persistent data (e.g., for access by one or more application execution instances or hardware resources).

The cache element 712 operation may be based on assumptions like those in the service-bus solutions, where individual parts of the system do not necessarily have to precisely address the communication they send to the flow system 702 but transfer this responsibility to the bus instances. One or more embodiments of the present application may extend this assumption and introduces an encoded payload layer wrapped by metadata used by the dispatcher 710 in the flow system architecture 700. One or more embodiments may also enclose the configuration regarding where the data in the flow system architecture 700 is to be sent inside the dispatcher 710. The dispatcher 710 may include a default configuration that recognizes non-persistent data from other communications and directs this data to the cache element 712. The dispatcher may also use the configuration of connections between system elements, built based on the user configuration received from the device interface 704, to find the correct destination in the flow system (e.g., flow system 702) for the transmitted data. Data stored in the cache element 712 may be available to the flow system 702 and the user and may be used when configuration changes and new data from applications and device interfaces are unavailable. The way data is transferred in and to the flow system 702 may, as a result, be scalable and allow for easy connection of additional elements that will produce data or consume data from other parts of the flow system architecture 700.

For example, in one or more embodiments, the adapter (e.g., adapter 211 and/or 304) can generate an encoded payload layer for each communication it receives from each component of the flow system architecture. The encoded payload layer can include data designating destination that the dispatcher 710 uses to direct the communications to the appropriate recipient. For example, the dispatcher 710 can receive a message with an encoded payload layer included in the header of a message and generate an additional payload based on the data of the encoded payload layer without decoding the message itself. The dispatcher 710 can then send this additional payload the appropriate recipient of the flow system architecture 700. Additionally, and/or alternatively, the encoded payload layer can be encoded into the message itself (e.g., the portion of the communication that is not the header), and the dispatcher 710 can decode the message and generate an additional payload based on the decoded data. The dispatcher 710 can then send this additional payload to the appropriate recipient of the flow system 700.

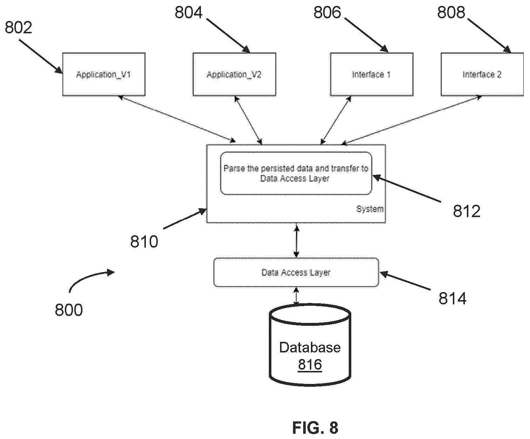

Referring to FIG. 8, the architecture 800 provides an embodiment of the persistent portion of the data store management 632 component, where the persistent portion of the data store management 632 component facilitates a predictable and reliable execution through power failure or system restart cycles. System and add-ons configurations, operating states, or other long term data are managed by persistent portion of the data store management 632 component to prevent data loss and does so with files and/or database storage on a physical media. The persistent portion of the data store management 632 component serves to facilitate storage and management of persisted data generated by the system, applications, and device interfaces, such as sensors and automation elements, with other applications (e.g., application 802 and 804) in the same or different connected systems (e.g., distributed flow system 206), and can utilize dispatcher 710. The persistent portion of the data store management 632 component introduces ease of use to anyone using the system to understand the protocol interface directly and to design and store their desired persisted data such as alarms, system logs, and configurations and manage operation with respect to their data without requiring consideration of the structure or format in which the data is being stored. Additionally, and/or alternatively, the persistent data portion of the data store management 632 component may work other components of the enablement framework 620 to receive, store, and manage the persistent data. For example, the dispatcher (e.g., dispatcher 710) may receive a persistent data configuration associated with one or more application instances of the plurality of application instances and provide, to a data access layer of the enablement framework, the persistent data. The data access layer may then store the persistent data.

One or more embodiments of the present application allow the user to understand their own application and persisted storage needs without requiring knowledge of other applications of the flow system. For example, as an offering, the GOOGLE protobuf may exposed to the add-ons with flexibility to manage their data with respect to different configurations and relationships. The add-ons may use that protobuf interface to provide the information to be persisted and the flow system architecture (e.g., architecture 200, 400, 500, 600, 700, and/or 800) may automatically parse it, manage it in different data structures, and persist that data.

For instance, one or more embodiments of the present application include the use of the protobufs as well as offering a layer of abstraction, security, and dynamic data management and data schema creation. For instance, one or more embodiments may utilize a GOOGLE protobuf, which offers a language neutral, platform neutral extensible mechanism of managing structured data which ensures that flow system works with binary data, and is easier to understand, read and write. One or more embodiments provide a layer of abstraction, which may maintain abstraction in each layer of internal communication. Providing this layer of abstraction results in future data storage needs being easily manageable and extensible. For example, the layer of abstraction may be easily extensible since one or more embodiments may be extended for payload layer metadata. One or more embodiments provide improvements to security, such as a parent child design structure with multiple data stores/data files managed thereby ensuring abstraction between different types of persisted data. These embodiments also offer file security for persisted data using file system security based on data protection needs. One or more embodiments also provide dynamic management of data based on operation and configuration selection. The flow system recognizes the persisted data based on a user choice of configuration (e.g., received through one or more of interface 806 or 808) and manages all operations on shared data.

In one or more embodiments, the data access layer can provide absolute extraction from the local data entity (e.g., the actual and/or physical data storage type of memory). The data access layer can be provided in addition to the other components of the enablement framework thereby ensuring access to data from different systems and ensuring that data is portable (e.g., can be moved to a non-SQL database). Additionally, by providing an additional abstract data layer, the data access layer can retain data interfaces for use with older or newer databases and execute process control statements (e.g., execute a SQL statement) or other applications independently for a physical flow computer while remaining independent from the data storage of that flow computer.

The enablement framework 620 may include an error management 637 component (which can also be included in the communication services 636 component). The error management component supports logging, reporting, or possibly taking corrective actions as determined by the framework components or the framework support for add-ons. The error management component may stop or restart any of its component or add-ons based on the operating parameters for execution, or it may report the conditions as warnings, notifications, or errors. For example, the error management component can start and manage all the other components of the flow computer system 600, including the devices of the hardware platform 602. Additionally, and/or alternatively, the error management component can react and recreate any parts of the system 600 that break or disappear.

The enablement framework 620 may include a user management 622 component. The user management 622 component supports user authentication, user authorization, and user profile and role access. Users are authenticated locally or through connectivity protocols such as OAuth2.0 and higher or utilizing lightweight directory access protocol (LDAP) services. Local authentication may also utilize secure access tokens via JavaScript object notation web token (JWT) access token, and may require unique user identification via a user email identification. Users may access various resources, components, or perform actions based on their authorization level using the user management 622 component. User authorization levels may also determine the user interface 606 views. The user management also manages user authorization pertaining to accessibility of system 600 or add-on specific data. The user management 622 component may be closely related to the security management 626 component with may also utilize a transport layer security (TLS) certificate to authenticate user and communications for human to machine or machine to machine communications.

For instance, the user management 622 component may request information regarding whether the user log in is a local user to the RTU system, a network user, and/or whether the user is an open application. For a local user, the device management 622 component may authenticate the user using a communication interface of the communication services 636 component provided to the user interface 606. For network devices, the user management 622 component may authenticate the user using a communication interface of the communication services 636 component to the network. When the user is accessing the RTU via an open application, the user management component 622 may add a communication interface of the communication services 636 component for the open application (e.g., management service 310 of the adapter 300).

The enablement framework 620 may utilize one or more components to monitor when there are one or more flow computers/RTUs with devices connected to the hardware platform 602 and/or architecture 600. The enablement framework 620 may also generate a dashboard in the user interface 606 unique to each flow computer/RTU with a connected device or utilize and existing dashboard in user interface 606 for communication with the flow computer/RTU.

In one or more embodiments when the enablement framework 620 is deployed on a custom hardware (e.g., hardware platform 602), it may be made aware of the various hardware ports (e.g., digital I/O port 224 and/or analog I/O port 222) available via the device management 628 component. The device management 628 component supports registration and utilization of hardware resources and the processes (be it framework components or an add-ons) utilizing those hardware resources. In one or more embodiments when the enablement framework 620 is deployed in a cloud environment (e.g., flow cloud computing system 108) or similar platforms (as other enterprise systems, virtual machines, or emulation environments) where hardware ports are not applicable, the device management component may also identify the targeted hardware resources and/or ports and make those hardware resources and/or ports unavailable, disabled, and/or restrict the use of features that are not available. As a result, device management 628 component may provide the advantages of such deployments, including simulation and testing, as well the ability to create a system configuration offline and such configuration to be used to configure other system deployments.

For instance, the architecture 600 including enablement framework 620 may be deployed on an RTU including hardware platform 602. The hardware platform 602 may include one or more serial ports and one or more Ethernet ports. The device management 628 component and detect the serial port(s) and the Ethernet port(s), and manage access and functioning of each port. The device management 628 component may also detect one or more further devices associated with the hardware platform 602 and one or more application instances 608, 610, and/or 612 utilizing the hardware platform 602. The device management 628 component may block access by further devices (e.g., network devices) to the hardware platform 602 beyond those detected serial ports(s) and/or Ethernet port(s)and/or further devices associated with the hardware platform 602 and allow access by the multiple application instances 608, 610, and/or 612 using that device (e.g., the instances of the same application or different applications for different applications). For example, device management 628 component can register what ports are available and monitor their utilization. The device management 628 component can receive a request for usage of a port and grant or deny the request based on availability of the port (e.g., physical availability or communicative availability) and/or priority of the request.

The enablement framework 620 may include a license management 624 component. The license management 624 component manages the licensing of other enablement framework 620 components or add-ons (e.g., application execution instances 608 - 618). Some components or add-ons may require a license to execute while others may not. The component or add-ons determine when a license is required, and when a license is required, defines the type of license and any other parameters (such as the number of license or credits) required for execution. The license management 624 component maintains the pool of licenses and includes the license types, number of licenses available, and the allocation or utilization of those licenses. Allocating and deallocating of licenses is performed by the license management 624 component and may be closely related to the security management 626 component of the enablement framework 620 as to the authorization of such actions. Adding and removing licenses to the license pool is also a feature of the license management 624 component and may be closely related to the security management 626 component. For example, security management 626 component may contact additional security servers for authorization servers (e.g., electronic mailbox system that have a directory and may authenticate to that directory). When connected, the security management 626 component may authenticate the user that is trying to log into the RTU by communicating with the user management 622 component and/or the license management 624 component.

For example, the license management 624 component may receive and store licenses for each application instance in memory, and may verify each application execution instance (e.g., individually or together depending on the license). Accordingly, the enablement framework 620 may be able to receive, by the dispatcher (e.g., communication services 636) and from a licensing service (e.g., client agent 204), data associated with a license of a first application instance of the plurality of application instances and data associated with a license of a second application instance of the plurality of application instances. The dispatcher may provide, and to the license manager (e.g., license management 624 component), the data associated with the license of the first application instance and the data associated with the license of the second application instance. The license manager may then verify the license of the first application instance and the license of the second application instance. The license manager may also store the data associated with the license of the first application instance and the data associated with the license of the second application instance in a license pool of the license manager.

The enablement framework 620 may also include a software update management 634 component. The software management 634 component controls the installation and removal of the enablement framework 620 components or add-ons. The software management 634 component maintains a list of installed add-ons and their revisions, and controls and verifies the installation process and dependencies of the enablement framework 620 components and add-ons. The software management 634 component also maintains and controls revisions and updates to the enablement framework 620. For instance, the software management 634 component may block and/or ignore data received from an application to be/being updated, or receive/process data from the application to be/being updated as necessary to allow dependent applications to continue operation. The software management 634 component may also be closely linked to the security management 626 component, as each software package may be secure and verified that the software package is authentic and has not been altered prior to installation. Add-on software update packages may include single or multiple sub-packages that may each be verified and installed together or separately and independently. The software management 634 component may include a self-correcting mechanism for resolving installation failures during or after installation. This may include reversal of the installation process, correction installation paths, or resolving installation dependencies.

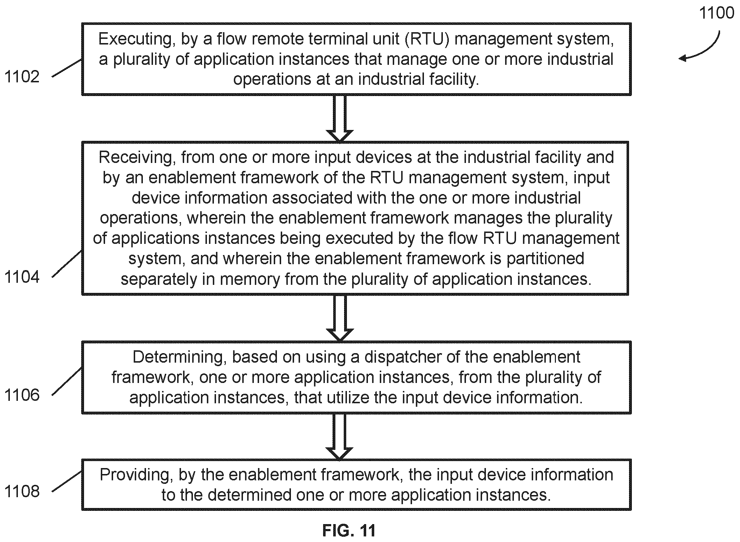

As shown in FIG. 11, one or more embodiments of the present application provide a process 1100 for operating a flow computer/RTU. Each step of process 1100 may be performed sequentially, or one or more steps of process 1100 may be performed simultaneously with one or more other step of process 1100. For instance, in process step 1102, a flow remote terminal unit (e.g., a flow computer/RTU) management system may execute a plurality of application instances (e.g., application execution instances 608, 610, 612, 614, 616, and/or 618) that manage one or more industrial operations at an industrial facility. For example, a flow remote terminal unit may be included in a flow system for controlling the production, manufacture, or transportation of a product (e.g., oil refinery, power plant, foundry, automobile manufacturing facility). A flow remote terminal unit may control (e.g., operate) a process of the overall system, such as a fluid valve or container applying pressure and/or heat, either directly (e.g., installed on the fluid valve or container with integrated sensors) or indirectly (e.g., over a wireless connection or from a flow computer/RTU installed on the fluid valve or container). To perform these functions, the flow remote terminal unit may execute a plurality of applications to monitor and/or control the process. The flow remote terminal unit management system may be an RTU computing device that is located within the industrial facility, and/or a cloud computing platform that is remote from the industrial facility.

In process step 1104, the flow remote terminal unit may receive, from one or more input devices at the industrial facility and by an enablement framework of the RTU management system, input device information associated with the one or more industrial operations. For instance, the flow remote terminal unit may receive sensor data from a sensor (e.g., temperature, pressure, fluid speed sensor) associated with the process the flow remote terminal unit executes applications therefor. An enablement framework (e.g., framework 226, 400, 500, 600, and/or 700) of the architecture of the flow remote terminal unit may receive this information. The flow remote terminal unit may receive the input device information (e.g., sensor data, I/O device information) from the sensor configured to measure one or more features (e.g., temperature, pressure, fluid speed) of the one or more industrial operations at the industrial facility, where the input device information comprises data associated with the measured one or more features (e.g., measured by the sensors).

Additionally, and/or alternatively, the enablement framework may manage the plurality of applications instances being executed by the flow RTU management system, and the enablement framework may be partitioned separately in memory from the plurality of application instances. For example, the enablement framework may utilize one or more components to manage the application instances (e.g., execution, installation, updating, licensing) of the RTU management system while running the application instances as add-ons to the architecture of the RTU management system. Partitioning the enablement framework separately in memory from the application instances allows for individual management (e.g., execution, installation, updating, licensing) of each application independently from the running of the enablement framework, and the application execution instances themselves may be partitioned separately from each other and the enablement framework. The dispatcher may then receive from and provide information between these memory partitions. For instance, providing, by the enablement framework, the input device information to the determined one or more application instances may further include providing, by the dispatcher and to a first memory partition of a first application instance of the determined one or more application instances, a first portion of the input device information, providing, by the dispatcher and to a second memory partition of a second application instance of the determined one or more application instances, a second portion of the input device information. Moreover, not only the applications but the application instances of each application may be separately partitioned in memory. For example, a second application instance of the determined one or more application instances may be a second instance of a same application of the first application instance of the determined one or more application instances.

In process step 1106, the RTU management system may determine, based on using a dispatcher of the enablement framework, one or more application instances, from the plurality of application instances, that utilize the input device information. For example, the enablement framework may include dispatching element 710 and/or communication services 210, 402, and/or 636. The dispatcher may receive the input device information and determine, based on the content of the received input device information, one or more application instances that are the appropriate recipient of the information (e.g., because the application instance is a temperature management application and the input device information is temperature information obtained using the temperature sensor).

In process step 1108, the RTU management system may provide, by the enablement framework, the input device information to the determined one or more application instances. For example, the dispatcher 710 of the enablement framework may provide the input device information directly to the appropriate application instance deployed on locally or virtually, such as (but not limited to) the flow remote terminal unit, one or more third party systems 202, the flow cloud computing system 108, the distributed flow system 206 (e.g., a further flow remote terminal unit), and/or a component of the same enablement framework.

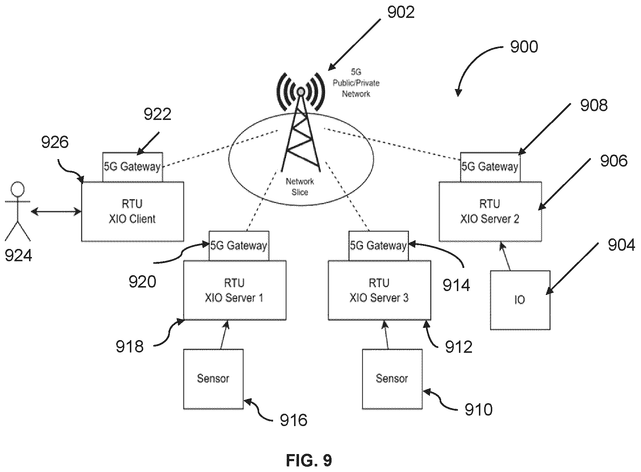

Referring to FIG. 9, one or more embodiments of the present application's architecture may be extended to distributed flow computer/RTU applications and device interface add-ons in cellular networks (e.g., 5G networks). For example, a 5G network 900 may include network site 902 through which communication between different devices (e.g., RTU 906, RTU 912, RTU 918, RTU 920) is routed via 5G gateways of the RTUs. The 5G network 900 may include an RTU 906 with a 5G gateway 908 and associated with an I/O port and/or device 904. RTU 906 may include (e.g., provide, host) a second IBM^{®} eXtremIO (XIO) server. The 5G network 900 may also include an RTU 912 with a 5G gateway 914 and associated with a sensor 910. RTU 912 may include a third XIO server. The 5G network 900 may include an RTU 918 with a 5G gateway 920 and associated with a sensor 916. The RTU 918 may host the first XIO server. The 5G network 900 may include RTU 926 with a 5G gateway 922 and associated with user 924. The RTU 920 may include a XIO client. One or more of RTUs 906, 914, and 918 may include any of the architectures 200, 300, 400, 500, 600, 700, and/or 800.

One or more embodiments of the present application provides a system with a modular architecture designed with distributed applications in mind, allowing flow computer/RTUs, applications, and device interfaces to be connected using a wired or fast wireless network. One instance in which embodiments may be leveraged is a distributed measurement system connected with a 5G network (e.g., 5G network 900). The low latency of the 5G network makes use of, when possible, enabling the rapid transfer of data produced by applications and device interfaces between RTUs (e.g., RTUs 906, 912, 928, 926). This data, often in real-time, is used for calculating operating parameters and may be distributed securely to avoid significant delays.

The XIO interface is the flow system add-on enabling remote connections. Depending on its flavor, this element may transform an RTU unit into a server (e.g., RTU 918, 906, 914) or a client node (e.g., RTU 926). The users (e.g., user 924) may build networks with multiple servers (e.g., RTU 918, 906, 914), sending real-time data, and a single client (e.g., RTU 926) may receive this data and provide configurations to the servers. Additionally, and/or alternatively, the XIO interface may connect the dispatching elements (e.g., communication services 636, dispatcher 710) of the devices with a secure, encrypted channel. The connection allows for sending commands and non-persistent data between the devices in the network.

The connection between the client (e.g., RTU 926) and the servers (e.g., RTU 906, 912, 918) may be used to send information about the calculations performed by applications based on sensors connected to the remote device (e.g., sensor 910, 916) and information about the sensors themselves. In the case of data from the sensors themselves, the server may be treated as a remote I/O (e.g., I/O 904). Moreover, one or more embodiments are universal and may be adapted to the needs of the user 924 by using appropriate devices acting as 5G gateways (e.g., 5G gateways 908, 914, 920, 922). This enables the use of both public and private 5G networks, depending on the needs of the user.

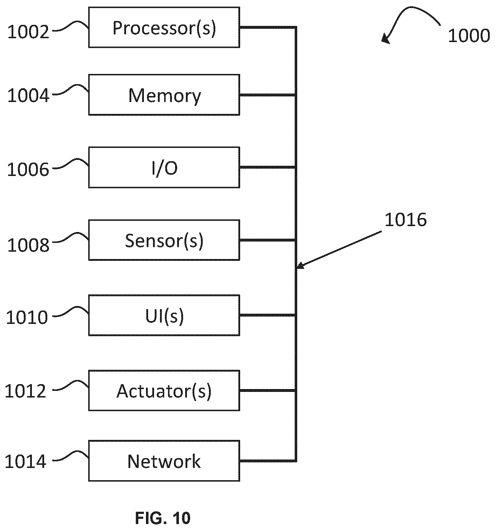

FIG. 10 is a block diagram of an exemplary system and/or device 1000 within the environment 100 (e.g., flow computer 106). The device/system 1000 includes a processor 1002, such as a central processing unit (CPU), controller, and/or logic, that executes computer executable instructions for performing the functions, processes, and/or methods described herein. In some examples, the computer executable instructions are locally stored and accessed from a non-transitory computer readable medium, such as memory/storage 1004, which may be a hard drive or flash drive. Memory 1004 may include read only memory (ROM) including computer executable instructions for initializing the processor 1002, and/or the random-access memory (RAM) as the main memory for loading and processing instructions executed by the processor 1002. The device/system 1000 may include an input/output port (I/O) 1006 for receiving signals and/or data from one or more sensor(s) 1008 (e.g., flow meters, temperature, pressure, amplifiers, and/or density transmitters and/or sensors). The device/system 1000 may include one or more sensor(s) 1008 associated with the industrial process as described above (e.g., flow meters, temperature, pressure, amplifiers, and/or density transmitters and/or sensors) for sensing features of the industrial process. The device/system 1000 may include one or more user interfaces (UI) 1010 for receiving input from a user and/or displaying information for a user. The device/system 1000 may include one or more actuators 1012 for controlling and/or performing the industrial process. The device/system 1000 may include a network interface 1014. The network interface 1014 may connect to a wired network or cellular network and to a local area network or wide area network, such as the network 104. The device/system 1000 may also include a bus 1016 that connects the processor 1002, memory 1004, I/O 1006, one or more sensor(s) 1008, one or more UI(s) 1010, one or more actuator(s) 1012, and/or the network interface 1014. The components within the device/system 200 may use the bus 202 to communicate with each other. The components within the device/system 1000 are merely exemplary and might not be inclusive of every component, server, device, computing platform, and/or computing apparatus within the device/system 1000. For example, the flow computer 106 may include all of the components within the device/system 1000, while the flow cloud computing system might not include the sensors 1008. Additionally, and/or alternatively, the device/system 1000 may further include components that might not be included within every entity of environment 100.

While subject matter of the present disclosure has been illustrated and described in detail in the drawings and foregoing description, such illustration and description are to be considered illustrative or exemplary and not restrictive. Any statement made herein characterizing the invention is also to be considered illustrative or exemplary and not restrictive as the invention is defined by the claims. It will be understood that changes and modifications may be made, by those of ordinary skill in the art, within the scope of the following claims, which may include any combination of features from different embodiments described above.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A method, comprising:
executing, by a flow remote terminal unit (RTU) management system, a plurality of application instances that manage one or more industrial operations at an industrial facility;
receiving, from one or more input devices at the industrial facility and by an enablement framework of the RTU management system, input device information associated with the one or more industrial operations, wherein the enablement framework manages the plurality of applications instances being executed by the flow RTU management system, and wherein the enablement framework is partitioned separately in memory from the plurality of application instances;
determining, based on using a dispatcher of the enablement framework, one or more application instances, from the plurality of application instances, that utilize the input device information; and
providing, by the dispatcher of the enablement framework, the input device information to the determined one or more application instances.

2. The method of claim 1, wherein the RTU management system is an RTU computing device that is located within the industrial facility and/or a cloud computing platform that is remote from the industrial facility.

3. The method of any one of the claims 1 to 2, wherein the one or more input devices comprise a sensor configured to measure one or more features of the one or more industrial operations at the industrial facility, and wherein the input device information comprises data associated with the measured one or more features.

4. The method of any one of the claims 1 to 3, wherein receiving, from the one or more input devices at the industrial facility and by the enablement framework of the RTU management system, the input device information further comprises:
receiving, by the dispatcher and from the one or more input devices, the input device information; and
wherein providing, by the enablement framework, the input device information to the determined one or more application instances further comprises:
providing, by the dispatcher and to a first memory partition of a first application instance of the determined one or more application instances, a first portion of the input device information; and
providing, by the dispatcher and to a second memory partition of a second application instance of the determined one or more application instances, a second portion of the input device information.

5. The method of any one of the claims 1 to 4, wherein a second application instance of the determined one or more application instances is a second instance of a same application of a first application instance of the determined one or more application instances.

6. The method of any one of the claims 1 to 5, wherein the enablement framework comprises a license manager, and wherein the method further comprises:
receiving, by the dispatcher and from a licensing service, data associated with a license of a first application instance of the plurality of application instances;
receiving, by the dispatcher and from the licensing service, data associated with a license of a second application instance of the plurality of application instances;
providing, by the dispatcher and to the license manager, the data associated with the license of the first application instance;
providing, by the dispatcher and to the license manager, the data associated with the license of the second application instance;
verifying, by the license manager, the license of the first application instance;
verifying, by the license manager, the license of the second application instance; and
storing, by the license manager, the data associated with the license of the first application instance and the data associated with the license of the second application instance in a license pool of the license manager.

7. The method of any one of the claims 1 to 6, further comprising:
allocating a use of a memory or one or more processors of the RTU management system between a first application instance of the plurality of application instances and a second application instance of the plurality of application instances.

8. The method of any one of the claims 1 to 7, further comprising:
receiving, by the dispatcher, non-persistent data associated with one or more application instances of the plurality of application instances;
providing, by the dispatcher and to a cache layer of the enablement framework, the non-persistent data; and
storing, by the cache layer, the non-persistent data.

9. The method of any one of the claims 1 to 8, further comprising:
receiving, by the dispatcher, a persistent data configuration associated with one or more application instances of the plurality of application instances;
providing, by the dispatcher and to a data access layer of the enablement framework, the persistent data; and
storing, by the data access layer, the persistent data.

10. The method of any one of the claims 1 to 9, wherein the input device information further comprises an encoded payload layer embedded in a header of the input device information, and wherein determining the one or more application instances that utilize the input device information further comprises:
decoding, by the dispatcher, the encoded payload layer embedded in the header; and
generating, by the dispatcher, an additional payload embedded in the input device information, and
wherein providing, by the dispatcher of the enablement framework, the input device information to the determined one or more application instances further comprises providing the additional payload embedded to the determined one or more application instances.

11. A remote terminal unit (RTU) management system comprising an enablement framework, wherein the RTU management system is configured to:
execute a plurality of application instances that manage one or more industrial operations at an industrial facility;
receive, using the enablement framework, input device information associated with the one or more industrial operations, wherein the enablement framework manages the plurality of applications instances being executed by the flow RTU management system, and wherein the enablement framework is partitioned separately in memory from the plurality of application instances;
determine, based on using the enablement framework, one or more application instances, from the plurality of application instances, that utilize the input device information; and
provide, using the enablement framework, the input device information to the determined one or more application instances.

12. The RTU management system of claim 11, further comprising one or more input devices, the one or more input devices comprising a sensor configured to measure one or more features of the one or more industrial operations at the industrial facility, and wherein the input device information comprises data associated with the measured one or more features.

13. The RTU management system of any one of the claims 1 to 12, wherein the enablement framework further comprises a dispatcher, and wherein the enablement framework is further configured to:
receive, by the dispatcher and from one or more input devices, the input device information; and
wherein providing, using the enablement framework, the input device information to the determined one or more application instances further comprises:
providing, by the dispatcher and to a first memory partition of a first application instance of the determined one or more application instances, a first portion of the input device information; and
providing, by the dispatcher and to a second memory partition of a second application instance of the determined one or more application instances, a second portion of the input device information.

14. The RTU management system of any one of the claims 1 to 13, wherein a second application instance of the determined one or more application instances is a second instance of a same application of a first application instance of the determined one or more application instances.

15. The RTU management system of any one of the claims 1 to 14, wherein the RTU management system further comprises a memory and one or more processors, wherein the enablement framework is further configured to:
allocate a use of the memory or the one or more processors between a first application instance of the plurality of application instances and a second application instance of the plurality of application instances.

16. The RTU management system of any one of the claims 1 to 15, wherein the enablement framework further comprises a dispatcher, and wherein the enablement framework is further configured to:
receive, using the dispatcher, non-persistent data associated with one or more application instances of the plurality of application instances;
provide, using the dispatcher and to a cache layer of the enablement framework, the non-persistent data; and
store, using the cache layer, the non-persistent data.

17. The RTU management system of any one of the claims 1 to 16, wherein the enablement framework further comprises a dispatcher, and wherein the enablement framework is further configured to:
receive, using the dispatcher, a persistent data configuration associated with one or more application instances of the plurality of application instances;
provide, using the dispatcher and to a data access layer of the enablement framework, the persistent data; and
store, using the data access layer, the persistent data.

18. The RTU management system of any one of the claims 1 to 17, wherein the enablement framework further comprises a dispatcher, wherein the input device information further comprises an encoded payload layer embedded in a header of the input device information, and wherein determining the one or more application instances that utilize the input device information further comprises:
decoding, by the dispatcher, the encoded payload layer embedded in the header; and
generating, by the dispatcher, an additional payload embedded in the input device information, and
wherein providing, using the enablement framework, the input device information to the determined one or more application instances further comprises providing the additional payload embedded to the determined one or more application instances.

19. A non-transitory computer readable medium comprising computer-readable instructions which, when executed by one or more processors, facilitate:
executing a plurality of application instances that manage one or more industrial operations at an industrial facility;
receiving, from one or more input devices at the industrial facility, input device information associated with the one or more industrial operations, wherein the enablement framework manages the plurality of applications instances being executed by the flow RTU management system, and wherein the enablement framework is partitioned separately in memory from the plurality of application instances;
determining, based on using a dispatcher of the enablement framework, one or more application instances, from the plurality of application instances, that utilize the input device information; and
providing, by the dispatcher of the enablement framework, the input device information to the determined one or more application instances.
